# EUROPEAN PATENT SPECIFICATION

(11) **EP 3 444 184 B1**
(45) Date of publication and mention of the grant of the patent: **18.11.2020**
(21) Application number: 18189554.1
(22) Date of filing: 17.08.2018
(51) Int. Cl.: B64C 25/24, B64C 25/26

(54) **ELECTRIC ACTUATOR WITH BIDIRECTIONAL COMPLIANCE**
ELEKTRISCHER AKTUATOR MIT BIDIREKTIONALER NACHGIEBIGKEIT
ACTIONNEUR ÉLECTRIQUE À CONFORMITÉ BIDIRECTIONNELLE

(30) Priority: 17.08.2017 US 201715679411
(43) Date of publication of application: 20.02.2019
(73) Proprietor: Goodrich Corporation, Charlotte, NC 28217-4578 (US)
(72) Inventor: DITZLER, Adam J., Fort Worth, TX 76244 (US); CHAUDHRY, Zaffir A., S. Glastonbury, CT 06073 (US)
(74) Representative: Dehns

(56) References cited:
- EP-A2- 2 302 262
- WO-A1-2016/087891
- US-A- 2 441 505
- US-A- 4 795 110

## Description

### FIELD

The present disclosure is directed generally to landing gear and more particularly, to bi-directional compliance in an electric actuator.

### BACKGROUND

Electric retract actuators are being developed for use on aircraft landing gear. Electric and hydraulic retract actuators that are attached between the aircraft and landing gear experience deflections during aircraft operations. Hydraulic retract actuators typically operate in a manner, e.g., unpowered during a majority of aircraft operation, that provides very little stiffness/deflection resistance in the landing gear load path and therefore, the hydraulic actuator does not substantially react or provide resistance to the deflections caused by landing or ground loads. An unpowered electric retract actuator has a stiffness/deflection resistance developed by, for example, a roller screw's backdriving capability. Although an increased backdriving load is desirable for reducing motor sizing in an electric retract actuator, such increased backdriving incorporates the roller screw into a load path that can force the actuator to react substantial landing or ground loads compared to a hydraulic actuator. Having an actuator in the load path can have negative effects on the actuator because, for example, it increases the wear on the actuator, causes the actuator to require additional maintenance, and reduces the actuator's life. US 2441505 A relates to a reciprocal actuator. US 4795110 A relates to a flight control surface actuation lock system. EP 2302262 A2 relates to a compliant, non-jamming actuator. WO 2016/087891 A1 relates to a horizontal stabilizer actuator.

### SUMMARY

According to the present invention, a landing gear adjustable electric actuator system is described in claim 1 and a method of operating said system is described in claim 11.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

Various features will become apparent to those skilled in the art from the following detailed description of the disclosed, non-limiting, embodiments. The drawings that accompany the detailed description can be briefly described as follows:
FIG. 1 is a schematic view of a landing gear system in deployed position, in accordance with various embodiments;
FIG. 2 is a perspective cross-sectional view of an adjustable electric actuator system, in accordance with various embodiments;
FIG. 3 is a perspective cross-sectional view of an adjustable electric actuator system , in accordance with various embodiments;
FIG. 4 is a method of adjusting an electric actuator, in accordance with various embodiments; and
FIG. 5 is a method of adjusting an electric actuator, in accordance with various embodiments.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that logical, chemical, and mechanical changes may be made without departing from the scope of the disclosure. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full, and/or any other possible attachment option. Additionally, any reference to without contact (or similar phrases) may also include reduced contact or minimal contact. Cross hatching lines may be used throughout the figures to denote different parts but not necessarily to denote the same or different materials.

Adjustable electric actuators of the present disclosure may provide weight savings to landing gear. The electric actuator arrangements of the present disclosure provide for a high backdriving load which enables efficient component sizing and also allows for the roller screw or ball screw to be substantially removed from the landing gear load path.

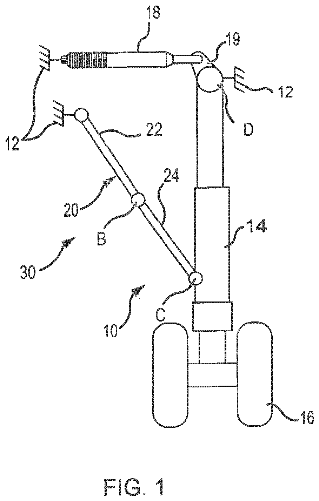

With reference to FIG. 1, a landing gear system 10 (landing gear 10) is illustrated according to various embodiments. In various embodiments, landing gear system 10 includes strut 14 that provides support for wheels 16. Strut 14 may be rotatable about a pivot, such as airframe 12, in response to an adjustable electric actuator 18 applying a force to an arm 19. A brace linkage 20 may, for example, connect a lower portion of strut 14 to airframe 12. In various embodiments, brace linkage 20 may comprise a side brace. In various embodiments, brace linkage 20 may comprise a drag brace. Brace linkage 20 may comprise a first brace link 22 and a second brace link 24. A lock linkage or mechanism and actuator arrangement 30 may be interconnected between first brace link 22 and second brace link 24 to lock landing gear 10 in a deployed position until landing gear retraction is commanded. In this regard, a lock linkage or mechanism and actuator arrangement 30 may be located about or connect to joint B. In Figure 1, landing gear 10 is in the deployed position. The first brace link 22 and second brace link 24 are pivotally locked relative to each other at a joint B. One end of second brace link 24 may be connected to strut 14 at pivot C. The lock linkage or mechanism and actuator arrangement 30 may unlock in response to the landing gear being commanded to move to the stowed position. In various embodiments, the strut 14 may be rotatable at pivot D in response to an adjustable electric actuator 18 applying a force to an arm 19. In various embodiments, adjustable electric actuator 18 may be an adjustable electric actuator designed to provide retracting and extension forces for moving landing gear 10.

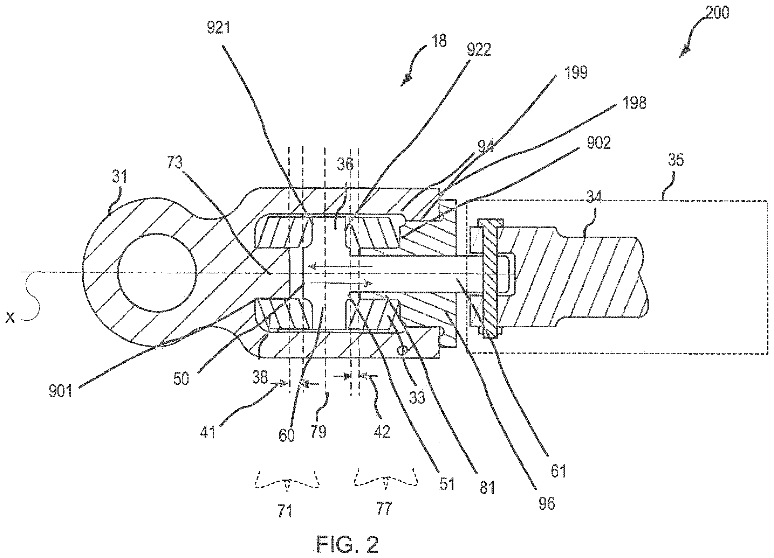

With reference to FIG. 2, an adjustable electric actuator system 200 is illustrated according to various embodiments. Adjustable electric actuator system 200 includes an adjustable electric actuator 18 coupled to an actuator output 35. In various embodiments, adjustable electric actuator 18 may include an end fitting 31, a limitation element 73, a limitation-retraction element 38, a compliance element 36, a limitation element 81, a limitation-retraction element 33, and a coupling element 96. Compliance element 36 is, according to the invention, a piston having a piston head 60. Coupling element 96, may act, for example, to retain limitation-retraction element 33. Coupling element 96 may be affixed to end-fitting 31 using, for example, bolts, threads, or any other means of attaching coupling element 96 to end fitting 31. Actuator output 35, may be, for example a translating element that includes a shaft 34. Shaft 34 may be a roller screw shaft or a ball screw shaft, or any other type of shaft having the ability to move compliance element 36 in the axial direction. In various embodiments, actuator output 35 may be pushed or pulled with a back driving load that may be a function of the entire electric actuator system 200, which may include a roller screw, a ball screw, in addition to shaft 34. Furthermore, the backdriving load may include other rotating or translating elements and their corresponding frictions, such as, for example, the motor or the gears associated with the gear train. In addition, an actuator output may be partially illustrated where a full adjustable electric actuator 18 may be connected to various elements, including motor elements, mechanical drive elements, etc.

Adjustable electric actuator 18 may be coupled to actuator output 35 via compliance element 36. Compliance element 36 may be coupled to end fitting 31 via coupling element 96. End fitting 31 of adjustable electric actuator 18, may, for example, be used to connect adjustable electric actuator 18 to an aircraft and landing gear 10.

In various embodiments, a primary function of limitation element 73 is to provide a physical stop to the movement of compliance element 36 in a linear axial direction towards side 901. In various embodiments, limitation element 73 may be, for example, a protruding metal element or a pad. In various embodiments, in order to achieve the physical stop, limitation element 73 is coupled to end fitting 31 and protrudes axially from, for example, a center position of side 901 of end fitting 31 in an axial direction towards compliance element 36. The amount of protrusion of limitation element 73 may be, for example, a length that allows compliance element 36 to travel a maximum distance in the axial direction towards side 901 of end fitting 31. For example, limitation element 73 may protrude a length necessary to allow compliance element 36 to achieve a portion of the actuator overtravel or the total of the actuator overtravel in the axial direction.

In various embodiments, a primary function of limitation element 81 is to provide a physical stop to the movement of compliance element 36 in a linear axial direction towards side 902. In various embodiments, limitation element 81 may be a protruding metal element or a pad. In various embodiments, in order to achieve a physical stop of compliance element 36 in the axial direction towards side 902, limitation element 81 is coupled to coupling element 96 and protrudes towards a piston head 60 of metal compliance element 36 from a center position of a coupling element 96. The amount of protrusion of limitation element 81 may be, for example, a length that allows compliance element 36 to travel a maximum distance in the axial direction towards side 902 of coupling element 96. For example, limitation element 81 may protrude a length necessary to allow compliance element 36 to achieve a portion of the actuator overtravel or the total of the actuator overtravel in the axial direction.

In various embodiments, a primary function of limitation-retraction element 38 is to provide both a physical stop to the movement of compliance element 36 in a linear axial direction towards side 901, as well as retraction capability of compliance element 36 towards side 902. The retraction distance may be, for example, a distance limited by either limitation-retraction element 33 and/or limitation element 81. In various embodiments, limitation-retraction element 38 and/or limitation-retraction element 33 may be spring elements such as, for example, Belleville washers, compression springs, leaf type springs, a pneumatic spring, a compressed nitrogen, or various other types of limitation-retraction springs. In various embodiments, in order for limitation-retraction element 33 to perform the limitation-retraction function, limitation-retraction element 38 may be positioned against side 901 and/or side 921 of piston head 60. In various embodiments, limitation-retraction element 38 may surround limitation element 73. In various embodiments, limitation-retraction element 38 may be individual springs located around limitation element 73.

In various embodiments, a primary function of limitation-retraction element 33, in addition to providing a physical stop to the movement of compliance element 36 in a linear axial direction, is to provide retraction capability of compliance element 36 towards side 901. Limitation-retraction element 33 may be positioned against side 902 of coupling element 96 and/or side 922 of piston head 60 and, surround limitation element 81. In various embodiments, when limitation-retraction element 38 and limitation-retraction element 33 are spring elements, the spring elements may be positioned facing in complementary directions relative to each other in the axial direction.

In various embodiments, compliance element 36 may include a piston head 60 coupled to a piston rod 61. In various embodiments, piston head 60 may have a flat side 921 or a side 921 with a limitation element 50. Limitation element 50 may be a protruding metal that may further limit the distance compliance element 36 may travel in the axial direction. Limitation element 50 may extend axially from compliance element 36 towards side 901. Limitation element 50 may have a width equivalent or not equivalent to limitation element 73. In various embodiments, piston head 60 may have a side 922 with a limitation element 51. Limitation element 51 may be a protruding metal that may further limit the distance compliance element 36 may travel in the axial direction. Limitation element 51 may extend axially from compliance element 36 towards side 902. Limitation element 51 may have a width equivalent or not equivalent to limitation element 81. In various embodiments, end fitting 31 (end fitting element 31) encapsulates or circumferentially surrounds limitation element 73, limitation-retraction element 38, limitation element 81 and limitation-retraction element 33. In various embodiments, end fitting element 31 encapsulates at least a portion of compliance element 36 and coupling element 96. Coupling element 96 may be coupled to end fitting 31 at side 198 and side 199.

In terms of location of limitation element 73, limitation-retraction element 38, and compliance element 36, compliance element 36 may be positioned such that a limitation element 73 and/or limitation-retraction element 38 are located axially on a first side 71 of piston head 60. For example, compliance element 36 may be positioned such that limitation-retraction element 38 and/or limitation element 73 are located axially on a first side 71. In terms of location of limitation element 81, limitation-retraction element 33, and compliance element 36, compliance element 36 may be positioned such that a limitation element 81 and/or limitation-retraction element 33 are located axially on a second side 77 of piston head 60. For example, compliance element 36 may be positioned such that limitation-retraction element 33 and/or limitation element 81 are located axially on second side 77 of piston head 60.

In various embodiments, compliance element 36 is coupled to actuator output 35 to allow actuator output 35 to guide compliance element 36 bi-directionally in the axial direction. In various embodiments, actuator output 35 may include a roller screw, a ball screw, and/or a shaft that guides compliance element 36 bi-directionally in the axial direction.

During operation of adjustable electric actuator 18, actuator output 35 guides or moves compliance element 36 a first distance 41 in a first axial direction. The first distance 41, may be, for example, dictated by the need to significantly reduce stiffness in adjustable electric actuator 18 or to minimize or eliminate any aircraft or landing gear 10 deflections caused by landing or ground loads from reaching actuator output 35. In various embodiments, the first distance 41 may be limited by limitation-retraction element 38 and/or by physical stops (e.g., limitation element 73 and/or limitation element 50) between the compliance element 36 and the end fitting element 31. Compliance element 36 may be further guided a second distance 42 in a second axial direction complementary to the first axial direction by actuator output 35. The second distance 42, may also be, for example, dictated by the need to significantly reduce stiffness in adjustable electric actuator 18 or to minimize or eliminate any aircraft or landing gear 10 deflections caused by landing or ground loads from reaching actuator output 35. In various embodiments, the second distance 42 may be limited by limitation-retraction element 33 or by physical stops (e.g., limitation element 81 and/or limitation element 51) located between side 922 and side 902.

In various embodiments, the first distance 41 and the second distance 42 combine for total actuator overtravel. For example, when the first distance 41 is a distance x and the second distance 42 is a distance y, the combined total distance may be the total actuator overtravel. For example, when the first distance 41 is a distance x and the second distance 42 equals the first distance 41, 2x may be considered the total actuator overtravel. In various embodiments, the first distance 41 and the second distance 42 may not be equivalent and the combined distance may still allow for a desired amount of overtravel.

In various embodiments, during the retraction/extension of landing gear 10, adjustable electric actuator 18 may first stroke through either a full stroke or partial stroke of limitation-retraction element 38 or limitation-retraction element 33. For example, limitation-retraction element 38 and limitation-retraction element 33 may be springs and either the full stroke or partial stroke may depend on the spring sizing and the external loads during retraction and/or extension of landing gear 10. If the expected deflections between the aircraft attachment point and landing gear attachment for the adjustable electric actuator 18 are less than ± 0.0127 m (½"), then a 0.0127 m (½") of overtravel in each of the first direction 41 and second direction 42 may be built into end fitting 31, compliance element 36, and/or the spring elements representing limitation-retraction element 38 and limitation-retraction element 33. Adjustable electric actuator 18 may deflect the compliance element 36 against either springs through the 0.0127 m (½") overtravel before hitting the physical stops, which may allow the adjustable electric actuator 18 to move the landing gear 10.

When landing gear 10 reaches either the retracted or extended position, and is locked into that position, then adjustable electric actuator 18 may then be able to be commanded to reverse direction and decompress compliance element 36 and either limitation-retraction element 38 or limitation-retraction element 33 the 0.0127 m (½") overtravel and put the adjustable electric actuator 18 into a mid-biased position, such as, for example, the position seen in Fig 2, which could allow a full 0.0127 m (½") overtravel in either direction to accommodate deflection. In various embodiments, compliance element 36 overtravel distance 41 and 42, in combination with limitation-retraction element 38 or limitation-retraction element 33 may, when springs are utilized, have an associated spring rate and fully bottomed load, which may be less than an overall actuator static limit load.

In various embodiments, an adjustable actuator length changes based in part on an overtravel amount. In various embodiments, the first distance in the first axial direction and the second distance in the second axial direction combine to form bi-directional compliance in an axial direction parallel to an actuator force in the axial direction and in series with actuator output 35 coupled to end fitting 31.

Further, during aircraft operations in flight or while operating on the ground, the aircraft structure and/or landing gear 10 may deflect, causing loads to develop at end fitting 31 due to the length of adjustable electric actuator 18 and its inherent stiffness. When a roller screw or ball screw is utilized in actuator output 35, the backdrivable roller screw or ball screw may provide, for example, minimal resistance to deflections. Further, the backdrive load associated with the backdrivable roller screw or ball screw may need to be relatively low and may result in a roller screw pitch that minimally contributes to the overall gear reduction. Additional gear reduction may be beneficial so that, for example, the motor speed may be kept efficient and/or the motor is able to operate at a potentially higher speed/lower torque to minimize impact on weight, volume, and performance, but may negatively impact the minimized backdriving load. In various embodiments, actuator output 35, which may include a non-backdrivable roller screw or ball screw, may be contemplated to overcome these deficiencies.

In various embodiments, actuator output 35 may utilize a non-backdrivable roller screw or ball screw to allow more efficient motor sizing which may force adjustable electric actuator 18 to withstand landing or ground loads through the load path formed by adjustable electric actuator 18. In addition, when a non-backdrivable roller screw or ball screw is utilized, loads that may develop due to deflections in the attachment points may need to be reacted by adjustable electric actuator 18. The reactions may cause an overall landing gear 10 stiffness that may react to the landing gear loads. The stiffness may cause adjustable electric actuator 18 to become part of the load path and may be the stiffness of the entire actuator as a whole, not just a single element such as a roller screw shaft. Reacting to the landing and/or external loads may, for example, cause the roller screw or ball screw to be sized larger than it would otherwise be. In various embodiments, an adjustable electric actuator 18 may be introduced that utilizes, for example, roller screw or ball screw associated with a spring based compliance element for managing external loads and deflections. A non-backdrivable roller screw or ball screw, may, for example, be an indication of a very high load backdriving roller screw or ball screw.

In various embodiments, during the extension and/or retraction, a series of rubber pads or any material that exhibits the appropriate load versus deflection behavior may be used as limitation-retraction element 38 and limitation-retraction element 33 in FIG. 2. The pads or other material may be used to allow adjustable electric actuator 18 to drive the landing gear 10 to an extended or retracted position.

In various embodiments, when, for example, adjustable electric actuator 18 is in operation, either in an extended or retracted position, adjustable electric actuator 18 is positioned in a centered position to provide compliance for deflections caused by external loads. The position of adjustable electric actuator 18 may be positioned by extending and/or retracting by a pre-determined amount.

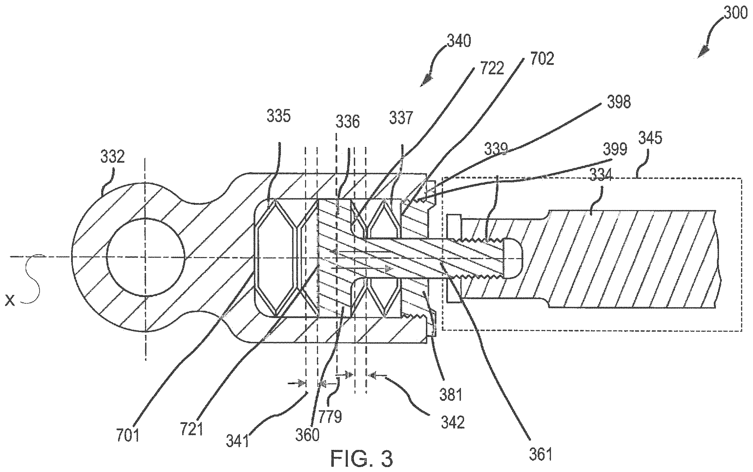

With reference to Figure. 3, an adjustable electric actuator system 300 is illustrated according to various embodiments. Adjustable electric actuator system 300 includes an adjustable electric actuator 340 coupled to an actuator output 345. In various embodiments, adjustable electric actuator 340 may include an end fitting 332, a limitation-retraction element 335, a compliance element 336, a limitation-retraction element 337, and a coupling element 381. In various embodiments, compliance element 336 may be a corrugated compliance element with a corrugated portion 339. Corrugated portion 339 may be used to screw compliance element 336 into shaft 334 of actuator output 345. Actuator output 345, may be, for example a translating element that includes shaft 334. Adjustable electric actuator 340 may be coupled to actuator output 345 via compliance element 336. End fitting 332 may be coupled to coupling element 381 at side 398 and side 399.

During operation, adjustable electric actuator 340 operates similarly to adjustable electric actuator 18 of FIG. 2, except that, for example, a limitation of axial distances may not be provided by limitation elements 73 and 81. Instead, the limitation of axial distances may be provided by limitation-retraction element 335 and limitation-retraction element 337. Adjustable electric actuator 340, utilizing limitation-retraction element 335 and limitation-retraction element 337, may allow the actuator length of adjustable electric actuator 340 to change in response to attachment deflections.

In various embodiments, limitation-retraction element 335 may provide both a physical stop to the movement of compliance element 336 in a linear axial direction towards side 701, as well as a retraction capability of compliance element 336 towards side 702. The retraction distance may be, for example, a distance limited by limitation-retraction element 337. The retraction distance may include, for example, a distance to allow compliance element 336 to return to a mid-position 79. The retraction distance may be a distance that allows compliance element 336 to travel the total actuator overtravel. In various embodiments, limitation-retraction element 335 and/or limitation-retraction element 337 may be spring elements such as, for example, Belleville washers, compression springs, leaf type springs, pneumatic springs, a compressed nitrogen, or various other types of limitation-retraction springs. In various embodiments, when limitation-retraction element 335 is a spring element, the spring element may be, for example, single stackable spring or a plurality of stacked springs. In various embodiments, in order for limitation-retraction element 335 to perform the limitation-retraction function, limitation-retraction element 335 may be positioned against side 701 and/or side 721 of piston head 360.

In various embodiments, limitation-retraction element 337, in addition to providing a physical stop to the movement of compliance element 336 in a linear axial direction towards side 702, provides retraction capability of compliance element 336 towards side 701. Limitation-retraction element 337 may be positioned against side 702 of coupling element 381 and/or side 722 of piston head 360, as well as positioned to surround a portion of piston rod 361 of compliance element 336. In various embodiments, when limitation-retraction element 337 is a spring element, the spring element may be, for example, a single stackable spring or a plurality of stacked springs in a stackable position, such as the reverse stacked position shown in, for example, FIG. 3.

As depicted in FIG. 3, compliance element 336 may be guided a first distance 341 in a first axial direction by actuator output 345, the first distance being limited by a limitation-retraction element 335. In various embodiments of the adjustable electric actuator 340, compliance element 336 may be guided a second distance 342 in a second axial direction by actuator output 345, the second distance 342 being limited by a limitation-retraction element 337. In various embodiments of the adjustable electric actuator 340, the first distance and the second distance may combine for a total actuator overtravel. In various embodiments, the combination of the first distance and the second distance may be more or less than total actuator overtravel.

According to the invention, the length of adjustable electric actuator 340 changes in response to attachment deflections while not reacting with appreciable loads that may come from, for example, a high backdriving load of adjustable electric actuator 340 or high stiffness of, for example, a non-backdrivable adjustable electric actuator 340. The adjustable electric actuator 340 may be, for example, used to remove the constraints on actuator output 345.

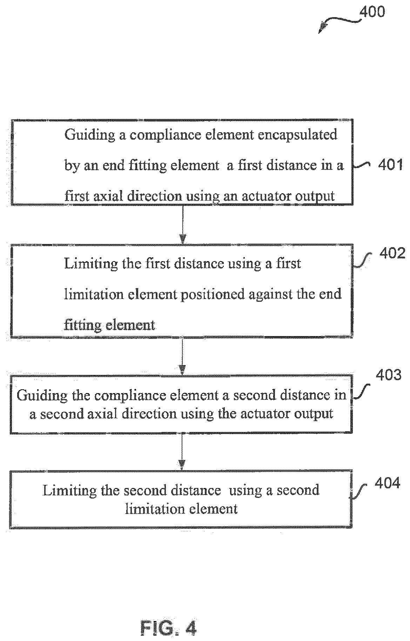

FIG. 4 illustrates a method 400 of adjusting an electric actuator according to various embodiments. Step 401 includes guiding a compliance element 36 encapsulated by an end fitting element 31 a first distance in a first axial direction using an actuator output 35. Step 402 includes limiting the first distance using a limitation element 73. Step 403 includes guiding compliance element 36 a second distance in a second axial direction using the actuator output 35. Step 404 includes limiting the second distance using limitation element 81. In various embodiments, the method may include returning compliance element 36 to a mid-position 79 after compliance element 36 is guided the first distance or after the compliance element 36 is guided the second distance.

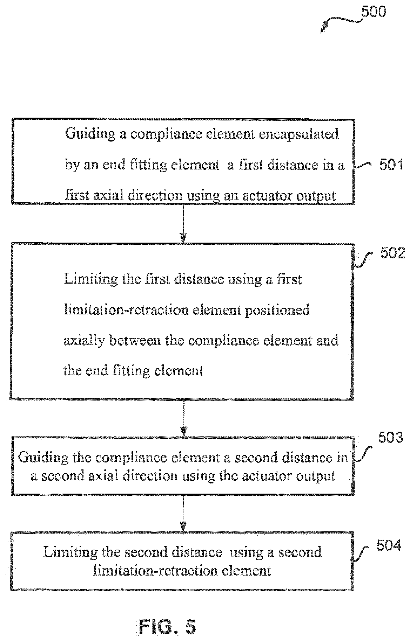

FIG. 5 illustrates a method 500 of adjusting an electric actuator according to various embodiments. Step 501 includes guiding a compliance element 36/336 encapsulated by an end fitting element 31/332 a first distance in a first axial direction using an actuator output 35/345. Step 502 includes limiting the first distance using a limitation-retraction element 38/335 element positioned axially between compliance element 36/336 and end fitting element 31/332. Step 503 includes guiding compliance element 36/336 a second distance in a second axial direction using the actuator output 35/345. Step 504 includes limiting the second distance using limitation-retraction element 33/337. In various embodiments, the method may include returning compliance element 36/336 to a mid-position 79/779 after compliance element 36/336 is guided the first distance or after the compliance element 36/336 is guided the second distance.

While the disclosure is described with reference to exemplary embodiments, it will be understood by those skilled in the art that various changes may be made without departing from the scope of the invention as defined by the claims. In addition, different modifications may be made to adapt the teachings of the disclosure to particular situations or materials, without departing from the essential scope thereof. The disclosure is thus not limited to the particular examples disclosed herein, but includes all embodiments falling within the scope of the appended claims.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of a, b, or c" is used in the claims, it is intended that the phrase be interpreted to mean that a alone may be present in an embodiment, b alone may be present in an embodiment, c alone may be present in an embodiment, or that any combination of the elements a, b and c may be present in a single embodiment; for example, a and b, a and c, b and c, or a and b and c. Different cross-hatching is used throughout the figures to denote different parts but not necessarily to denote the same or different materials.

Systems, methods and apparatus are provided herein. In the detailed description herein, references to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. A landing gear adjustable electric actuator system, comprising:
an actuator output (35);
a piston head (60);
a piston rod (61) coupled to the piston head (60), the piston rod being coupled to said actuator output;
an end fitting (31) encapsulating at least a portion of said piston head (60);
a coupling element (96) affixed to the end fitting (31), wherein the piston rod (61) is coupled to the end fitting (31) via the coupling element (96);
a first limitation element (73) protruding axially from a center position of a first inner side (901) of the end fitting (31);
wherein said piston head (60) is guided a first distance in a first axial direction by said actuator output, said first distance being limited by the first limitation element (73);
a first limitation retraction element (38) positioned against the first inner side (901) of the end fitting (31) and a first side (921) of the piston head (60); and
a second limitation retraction element (33) positioned against a second inner side (902) of the end fitting (31) and a second side (922) of the piston head (60), wherein the first limitation
retraction element (38) is positioned facing a complementary direction relative to the second limitation retraction element (33) in the axial direction;
wherein a length of the electric actuator system is configured to change in response to
attachment deflections while not reacting with appreciable loads from the actuator output due to a high backdriving load of the actuator output or a stiffness of a non-backdrivable actuator output.

2. The adjustable electric actuator system of claim 1, wherein said piston head (60) is guided a second distance in a second axial direction by said actuator output, said second distance being limited by the second limitation element (81).

3. The adjustable electric actuator system of claim 1 or 2, wherein said first limitation element is at least one of a spring element, a pad, or a metal element.

4. The adjustable electric actuator system of claim 1, 2 or 3, wherein said actuator output is a shaft (34).

5. The adjustable electric actuator system of any of preceding claims, wherein said piston head (60) is guided said first distance from a mid-position, and is returned to said mid-position after said piston head (60) is guided said first distance from said mid-position or after said piston head (60) is guided a second distance in a second axial direction by said actuator output, said second distance being limited by a second limitation element.

6. The adjustable electric actuator system of claim 3, wherein said first limitation element is a metal element that protrudes from a center position of said end fitting.

7. The adjustable electric actuator system of claim 2, wherein said first distance and said second distance combine for total actuator overtravel, or wherein said first distance in said first axial direction and said second distance in said second axial direction combine to form bi-directional compliance in an axial direction parallel to an actuator force in said axial direction and in series with said actuator output coupled to said end fitting.

8. The adjustable electric actuator system of claim 3, wherein when said first limitation element is said spring element, said piston head (60) has an associated spring load at maximum spring travel in said first axial direction and a second axial direction less than an overall actuator static limit load.

9. The adjustable electric actuator system of claim 1, wherein said piston head (60) is retracted a second distance in a second axial direction by said first limitation-retraction element, and preferably wherein said second distance is limited by the second limitation-retraction element (33).

10. The adjustable electric actuator system of claim 9, wherein said first limitation-retraction element is a first plurality of springs, and preferably wherein said second limitation-retraction element is a second plurality of springs, and preferably wherein said second plurality of springs surround a portion of a rod of said piston head (60), and preferably wherein said first plurality of springs are Belleville washers and said second plurality of springs are Belleville washers.

11. A method of operating the landing gear adjustable electric actuator system according to any preceding claim, comprising:
guiding the piston head (60) the first distance in the first axial direction using the actuator output;
limiting said first distance using the first limitation element;
guiding said piston head (60) a second distance in a second axial direction using said actuator output; and
limiting said second distance using the second limitation retraction element, wherein the
first limitation retraction element (38) is positioned facing a complementary direction relative to the second limitation retraction element (33) in an axial direction;
wherein a length of the electric actuator system is configured to change in response to attachment deflections while not reacting with appreciable loads from the actuator output due to a high backdriving load of the actuator output or a high stiffness of a non-backdrivable actuator output.

12. The method of claim 11, further comprising guiding said piston head (60) a second distance in a second axial direction using said actuator output.

13. The method of claim 12, further comprising limiting said second distance using the second limitation-retraction element.

14. The method of claim 12, further comprising returning said piston head (60) to a mid-position after said piston head (60) is guided said first distance or after said piston head (60) is guided said second distance.

## Patentansprüche

1. Einstellbares elektrisches Aktuatorsystem eines Fahrwerks, das Folgendes umfasst:
einen Aktuatorausgang(35);
einen Kolbenkopf (60);
eine Kolbenstange (61), die an den Kolbenkopf (60) gekoppelt ist, wobei die Kolbenstange an den Aktuatorausgang gekoppelt ist;
ein Endverbindungsstück (31), das mindestens einen Abschnitt des Kolbenkopfs (60) einkapselt;
ein Kopplungselement (96), das an dem Endverbindungsstück (31) befestigt ist, wobei die Kolbenstange (61) über das Kopplungselement (96) an das Endverbindungsstück (31) gekoppelt ist;
ein erstes Begrenzungselement (73), das axial von einer zentralen Position einer ersten Innenseite (901) des Endverbindungsstücks (31) hervorsteht;
wobei der Kolbenkopf (60) von dem Aktuatorausgang über eine erste Entfernung in eine erste axiale Richtung geführt wird, wobei die erste Entfernung durch das erste Begrenzungselement (73) begrenzt ist;
ein erstes Begrenzungsrückzugelement (38), das gegen die erste Innenseite (901) des Endverbindungsstücks (31) und eine erste Seite (921) des Kolbenkopfs (60) positioniert ist; und
ein zweites Begrenzungsrückzugelement (33), das gegen die zweite Innenseite (902) des Endverbindungsstücks (31) und eine zweite Seite (922) des Kolbenkopfs (60) positioniert ist, wobei das erste Begrenzungsrückzugelement (38) in eine komplementäre Richtung relativ zu dem zweiten Begrenzungsrückzugelement (33) in der axialen Richtung weisend positioniert ist;
wobei eine Länge des elektrischen Aktuatorsystems dazu konfiguriert ist, sich als Reaktion auf Anbringungsdurchbiegungen zu verändern, während sie auf nennenswerte Lasten von dem Aktuatorausgang aufgrund einer hohen Rückwärtsantriebslast des Aktuatorausgangs oder einer hohen Steifigkeit eines nichtrückwärtsantreibbaren Aktuatorausgangs nicht reagiert.

2. Einstellbares elektrisches Aktuatorsystem nach Anspruch 1, wobei der Kolbenkopf (60) von dem Aktuatorausgang über eine zweite Entfernung in eine zweite axiale Richtung geführt wird, wobei die zweite Entfernung durch das zweite Begrenzungselement (81) begrenzt ist.

3. Einstellbares elektrisches Aktuatorsystem nach Anspruch 1 oder 2, wobei das erste Begrenzungselement mindestens eines von einem Federelement, einem Polster oder einem Metallelement ist.

4. Einstellbares elektrisches Aktuatorsystem nach Anspruch 1, 2 oder 3, wobei der Aktuatorausgang eine Welle (34) ist.

5. Einstellbares elektrischen Aktuatorsystem nach einem der vorhergehenden Ansprüche, wobei der Kolbenkopf (60) von einer Mittelposition über die erste Entfernung geführt wird und zu der Mittelposition zurückgeführt wird, nachdem der Kolbenkopf (60) von der Mittelposition über die erste Entfernung geführt wird oder nachdem der Kolbenkopf (60) durch den Aktuatorausgang über die zweite Entfernung in die zweite axiale Richtung geführt wird, wobei die zweite Entfernung von einem zweiten Begrenzungselement begrenzt ist.

6. Einstellbares elektrisches Aktuatorsystem nach Anspruch 3, wobei das erste Begrenzungselement ein Metallelement ist, das von einer zentralen Position des Endverbindungsstücks hervorsteht.

7. Einstellbares elektrisches Aktuatorsystem nach Anspruch 2, wobei die erste Entfernung und die zweite Entfernung sich zu einem Gesamtaktuatornachlaufweg kombinieren, oder wobei die erste Entfernung in die erste axiale Richtung und die zweite Entfernung in die zweite axiale Richtung sich kombinieren, um eine bidirektionale Nachgiebigkeit in eine axiale Richtung parallel zu einer Aktuatorkraft in die axiale Richtung zu bilden und in Reihe mit dem Aktuatorausgang an das Endverbindungsstück gekoppelt sind.

8. Einstellbares elektrisches Aktuatorsystem nach Anspruch 3, wobei der Kolbenkopf (60), wenn das erste Begrenzungselement das Federelement ist, eine damit assoziierte Federlast bei einem maximalen Federweg in die erste axiale Richtung und eine zweite axiale Richtung aufweist, das geringer ist als eine gesamte statische Begrenzungslast des Aktuators.

9. Einstellbares elektrisches Aktuatorsystem nach Anspruch 1, wobei der Kolbenkopf (60) von dem ersten Begrenzungsrückzugelement über eine zweite Entfernung in eine zweite axiale Richtung zurückgezogen wird, und vorzugsweise wobei die zweite Entfernung von dem zweiten Begrenzungsrückzugelement (33) begrenzt ist.

10. Einstellbares elektrisches Aktuatorsystem nach Anspruch 9, wobei es sich bei dem ersten Begrenzungsrückzugelement um eine erste Vielzahl von Federn handelt, und vorzugsweise wobei es sich bei dem zweiten Begrenzungsrückzugelement um eine zweite Vielzahl von Federn handelt, und vorzugsweise wobei die zweite Vielzahl von Federn einen Abschnitt einer Stange der Kolbenstange (60) umgibt, und vorzugsweise wobei es sich bei der ersten Vielzahl von Federn um Tellerfedern handelt und es sich bei der zweiten Vielzahl von Federn um Tellerfedern handelt.

11. Verfahren zum Betreiben eines einstellbaren elektrischen Aktuatorsystems eines Fahrwerks nach einem der vorhergehenden Ansprüche, das Folgendes umfasst:
Führen des Kolbenkopfs (60) über die erste Entfernung in die axiale Richtung unter Verwendung des Aktuatorausgangs;
Begrenzen der ersten Entfernung unter Verwendung des ersten Begrenzungselements;
Führen des Kolbenkopfs (60) über eine zweite Entfernung in eine zweite axiale Richtung unter Verwendung des Aktuatorausgangs; und
Begrenzen der zweiten Entfernung unter Verwendung des zweiten Begrenzungsrückzugelements, wobei das erste Begrenzungsrückzugelement (38) in eine komplementäre Richtung relativ zu dem zweiten Begrenzungsrückzugelement (33) in eine axiale Richtung weisend positioniert ist;
wobei eine Länge des elektrischen Aktuatorsystems dazu konfiguriert ist, sich als Reaktion auf Anbringungsdurchbiegungen zu verändern, während sie auf nennenswerte Lasten von dem Aktuatorausgang aufgrund einer hohen Rückwärtsantriebslast des Aktuatorausgangs oder einer hohen Steifigkeit eines nichtrückwärtsantreibbaren Aktuatorausgangs nicht reagiert.

12. Verfahren nach Anspruch 11, ferner umfassend ein Führen des Kolbenkopfs (60) über eine zweite Entfernung in eine zweite axiale Richtung unter Verwendung des Aktuatorausgangs.

13. Verfahren nach Anspruch 12, ferner umfassend ein Begrenzen der zweiten Entfernung unter Verwendung des zweiten Begrenzungsrückzugelements.

14. Verfahren nach Anspruch 12, ferner umfassend ein Zurückführen des Kolbenkopfs (60) in eine Mittelposition, nachdem der Kolbenkopf (60) über die erste Entfernung geführt wird oder nachdem der Kolbenkopf (60) über die zweite Entfernung geführt wird.

## Revendications

1. Système d'actionneur électrique réglable de train d'atterrissage, comprenant :
une sortie d'actionneur (35) ;
une tête de piston (60) ;
une tige de piston (61) couplée à la tête de piston (60), la tige de piston étant couplée à ladite sortie d'actionneur ;
un raccord d'extrémité (31) encapsulant au moins une portion de ladite tête de piston (60) ;
un élément de couplage (96) apposé sur le raccord d'extrémité (31), dans lequel la tige de piston (61) est couplée au raccord d'extrémité (31) via l'élément de couplage (96) ;
un premier élément de limitation (73) faisant saillie axialement depuis une position de centre d'un premier côté intérieur (901) du raccord d'extrémité (31) ;
dans lequel ladite tête de piston (60) est guidée sur une première distance dans une première direction axiale par ladite sortie d'actionneur, ladite première distance étant limitée par le premier élément de limitation (73) ;
un premier élément de rétraction de limitation (38) positionné contre le premier côté intérieur (901) du raccord d'extrémité (31) et un premier côté (921) de la tête de piston (60) ; et
un second élément de rétraction de limitation (33) positionné contre un second côté intérieur (902) du raccord d'extrémité (31) et un second côté (922) de la tête de piston (60), dans lequel le premier élément de rétraction de limitation (38) est positionné face à une direction complémentaire par rapport au second élément de rétraction de limitation (33) dans la direction axiale ;
dans lequel une longueur du système d'actionneur électrique est conçue pour changer en réponse à des déflexions de fixation tout en ne réagissant pas à des charges appréciables provenant de la sortie d'actionneur en raison d'une charge d'entraînement inverse élevée de la sortie d'actionneur ou d'une raideur élevée d'une sortie d'actionneur sans entraînement inverse.

2. Système d'actionneur électrique réglable selon la revendication 1, dans lequel ladite tête de piston (60) est guidée sur une seconde distance dans une seconde direction axiale par ladite sortie d'actionneur, ladite seconde distance étant limitée par le second élément de limitation (81).

3. Système d'actionneur électrique réglable selon la revendication 1 ou 2, dans lequel ledit premier élément de limitation est au moins l'un d'un élément de ressort, d'un patin, ou d'un élément métallique.

4. Système d'actionneur électrique réglable selon la revendication 1, 2 ou 3, dans lequel ladite sortie d'actionneur est un arbre (34).

5. Système d'actionneur électrique réglable selon l'une quelconque des revendications précédentes, dans lequel ladite tête de piston (60) est guidée sur ladite première distance depuis une position médiane, et est renvoyée à ladite position médiane après guidage de ladite tête de piston (60) sur ladite première distance depuis ladite position médiane ou après guidage de ladite tête de piston (60) sur une seconde distance dans une seconde direction axiale par ladite sortie d'actionneur, ladite seconde distance étant limitée par un second élément de limitation.

6. Système d'actionneur électrique réglable selon la revendication 3, dans lequel ledit premier élément de limitation est un élément métallique qui fait saillie depuis une position de centre dudit raccord d'extrémité.

7. Système d'actionneur électrique réglable selon la revendication 2, dans lequel ladite première distance et ladite seconde distance se combinent pour un dépassement de course d'actionneur total, ou dans lequel ladite première distance dans ladite première direction axiale et ladite seconde distance dans ladite seconde direction axiale se combinent pour former une conformité bidirectionnelle dans une direction axiale parallèle à une force d'actionneur dans ladite direction axiale et en série avec ladite sortie d'actionneur couplée audit raccord d'extrémité.

8. Système d'actionneur électrique réglable selon la revendication 3, dans lequel lorsque ledit premier élément de limitation est ledit élément de ressort, ladite tête de piston (60) a une charge de ressort associée à une course de ressort maximale dans ladite première direction axiale et une seconde direction axiale inférieure à une charge de limite statique d'actionneur globale.

9. Système d'actionneur électrique réglable selon la revendication 1, dans lequel ladite tête de piston (60) est rétractée sur une seconde distance dans une seconde direction axiale par ledit premier élément de limitation-rétraction, et dans lequel de préférence ladite seconde distance est limitée par le second élément de Imitation-rétraction (33).

10. Système d'actionneur électrique réglable selon la revendication 9, dans lequel ledit premier élément de limitation-rétraction est une première pluralité de ressorts, et dans lequel de préférence ledit second élément de limitation-rétraction de limitation est une seconde pluralité de ressorts, et dans lequel de préférence ladite seconde pluralité de ressorts entourent une portion d'une tige de ladite tête de piston (60), et dans lequel de préférence ladite première pluralité de ressorts sont des rondelles Belleville et ladite seconde pluralité de ressorts sont des rondelles Belleville.

11. Procédé de fonctionnement du système d'actionneur électrique réglable de train d'atterrissage selon une quelconque revendication précédente, comprenant :
le guidage de la tête de piston (60) sur la première distance dans la première direction axiale à l'aide de la sortie d'actionneur ;
la limitation de ladite première distance à l'aide du premier élément de limitation ;
le guidage de ladite tête de piston (60) sur une seconde distance dans une seconde direction axiale à l'aide de ladite sortie d'actionneur ; et
la limitation de ladite seconde distance à l'aide du second élément de limitation et de rétraction, dans lequel le premier élément de limitation et de rétraction (38) est positionné face à une direction complémentaire par rapport au second élément de limitation et de rétraction (33) dans une direction axiale ;
dans lequel une longueur du système d'actionneur électrique est conçue pour changer en réponse à des déflexions de fixation tout en ne réagissant pas à des charges appréciables provenant de la sortie d'actionneur en raison d'une charge d'entraînement inverse élevée de la sortie d'actionneur ou d'une raideur élevée d'une sortie d'actionneur sans entraînement inverse.

12. Procédé selon la revendication 11, comprenant en outre le guidage de ladite tête de piston (60) sur une seconde distance dans une seconde direction axiale à l'aide de ladite sortie d'actionneur.

13. Procédé selon la revendication 12, comprenant en outre la limitation de ladite seconde distance à l'aide du second élément de limitation-rétraction.

14. Procédé selon la revendication 12, comprenant en outre le renvoi de ladite tête de piston (60) à une position médiane après guidage de ladite tête de piston (60) sur ladite première distance ou après guidage de ladite tête de piston (60) sur ladite seconde distance.
